# DEMANDE DE BREVET EUROPEEN

(11) **EP 1 445 992 A1**
(43) Date de publication de la demande: **11.08.2004**
(21) Numéro de dépôt: 04300035.5
(22) Date de dépôt: 22.01.2004
(51) Int. Cl.: H05F 3/02, E04F 15/10, E04F 15/02, B32B 27/18

(54) **Revêtement de sol stratifié astatique**

(30) Priorité: 24.01.2003 FR 0300788
(71) Demandeur: Espace Production International EPI (Société Anonyme), 67520 Marlenheim (FR)
(72) Inventeur: Strub, Jean-Jacques, 67000 Strasbourg (FR); Miclo, Thierry, 67100 Strasbourg (FR); Campo, Claude, 67000 Strasbourg (FR)
(74) Mandataire: Rhein, Alain

(57) **Abrégé**

L'invention a trait à un revêtement de sol stratifié composé de lames (1) comportant une âme (2) à base de bois, en particulier issue d'un panneau dérivé bois de type HDF ou MDF, recevant sur sa face supérieure (3), un revêtement décoratif (4) et un overlay (7) comportant une résine d'imprégnation.

Ce revêtement de sol est caractérisé par le fait que la résine d'imprégnation du revêtement décoratif (4) et/ou de l'overlay (7) comporte une charge sous forme d'un ou d'un mélange d'électrolytes de manière à diminuer sa résistivité.

## Description

L'invention concerne un revêtement de sol stratifié composé de lames comportant une âme à base de bois, en particulier issue d'un panneau dérivé bois de type HDF ou MDF, recevant, sur sa face supérieure, un revêtement décoratif et un overlay comportant une résine d'imprégnation.

La présente invention concerne le domaine des revêtements de sols stratifiés.

L'on connaît déjà de nombreux revêtements de sols stratifiés répondant à la description ci-dessus, c'est à dire composés d'une pluralité de lames que l'on assemble, par collage ou emboîtement mécanique. Dans de nombreux cas, ces lames comportent une âme à base de bois, par exemple de type HDF ou MDF, c'est à dire constituée à partir de fibres de bois agglomérées sous presse et par addition d'un liant, tel qu'une résine. Cette âme est recouverte, sur sa face supérieure, d'un revêtement décoratif, tandis que sa face inférieure reçoit, usuellement, un revêtement pour équilibrer les contraintes, appelé couramment balance.

A ce propos, le revêtement décoratif est constitué, par une feuille imprimée appliquée sur l'âme à base de bois par imprégnation d'une résine, par exemple de type mélamine ou autre.

Est ensuite appliqué, de manière similaire par imprégnation de résine, de type mélamine ou autre, souvent chargée d'oxyde d'alumine, un overlay sous forme d'une feuille cellulosique. La balance consiste, fréquemment, en une simple feuille en papier kraft, également appliquée par imprégnation de résine.

Il se trouve que ce type de revêtement de sol stratifié est en mesure d'accumuler en surface d'importantes charges électrostatiques, libérées, très souvent, au travers des usagers évoluant sur le revêtement lorsqu'ils saisissent un élément de forte conductivité, tel qu'une poignée d'une porte ou autre.

Evidemment, les décharges que subissent ces usagers à de telles occasions sont particulièrement désagréables et entraînent des risques d'accidents, en particulier en raison de l'effet de surprise qui en résulte.

On notera, à ce propos, que l'écoulement de cette électricité statique susceptible d'être accumulée par un tel revêtement de sol peut exposer un usager à une tension corporelle de l'ordre de 10kV. Tout particulièrement, cette tension corporelle est mesurée dans des conditions normalisées, en faisant évoluer une personne, avec des chaussures elles même normalisées, sur un revêtement de sol parfaitement nettoyé, notamment avec de l'eau distillée, dans un environnement avec un degré d'hygrométrie contrôlé. Ce revêtement de sol, d'une surface bien définie, est, par ailleurs, disposé sur une plaque isolante, tandis qu'une première électrode, raccordée à un appareil de mesure, est placée en-dessous de ce revêtement de sol, l'usager tenant par la main la seconde électrode de mesure. L'on se référera plus particulièrement à la norme DIN IEC 1340-4-1 pour les conditions de mesure de cette tension corporelle.

Evidemment, cette électricité statique peut également entraîner des effets néfastes sur des appareillages électriques ou électroniques. Dans le cas d'un ordinateur, une telle décharge d'électricité statique peut causer des dommages importants, en particulier la perte d'informations.

La raison pour laquelle ce type de revêtement de sol est susceptible d'accumuler des charges électrostatiques provient de son caractère isolant, aggravé habituellement par la présence d'une sous-couche iso phonique, elle aussi isolante. De plus, l'on a observé que la succession des couches qui le composent, à savoir l'âme à base de bois, la feuille décorative imprégnée de résine, l'overlay chargé d'oxyde d'alumine et, finalement, la balance, lui confère les caractéristiques d'un condensateur.

Pour remédier à ce problème, il est prévu, par le document EP-1.223.793, d'intégrer des charges conductrices, par exemple des particules de carbone, dans le matériau iso phonique que l'on vient coller sous la face arrière des lames du revêtement de sol stratifié. Une autre solution consiste à appliquer sous l'isolant phonique une couche d'un matériau conducteur, capable d'écouler ces charges électrostatiques.

Cette intervention au niveau de la sous couche d'un tel revêtement de sol stratifié résulte du constat, selon ce document intérieur, qu'aucune modification ne peut être envisagée au niveau du revêtement lui-même.

Il est encore connu par le document WO-84/02881, un panneau stratifié, dit HPL, c'est à dire subissant, en cours de son procédé de fabrication, des opérations de laminage sous haute pression qui ne peuvent être mises en oeuvre pour l'obtention d'un, revêtement de sol stratifié, dans la mesure où l'âme à base de bois de ce dernier ne peut supporter ces pressions élevées.

Quoi qu'il en soit, le stratifié HPL décrit dans ce document antérieur, comporte une feuille de surface décor contenant un sel d'ammonium en tant que charge conductrice. et imprégnée d'une résine thermodurcissable. Sous cette feuille de surface conductrice, le panneau comporte une feuille faiblement colorée, voire blanche, imprégnée d'une résine mélamine-formaldehyde, de manière à constituer une barrière par rapport à une nouvelle feuille d'un matériau conducteur, en particulier chargé de particules de noir de carbone. Au travers d'une résine d'imprégnation adaptée, cette feuille en matériau conducteur est appliquée sur un sandwich de plusieurs feuilles imprégnées d'une résine phénolique. Sous ces multiples couches est, finalement, appliquée une feuille de papier kraft.

Ce stratifié HPL est susceptible, par la suite, d'être appliqué sur un support quelconque, notamment sur un panneau en bois aggloméré.

Le document US-4.724.187 décrit, lui aussi, un panneau décoratif, de type HPL, comportant un overlay et une feuille décor imprégnée d'une résine mélamine et surmontant un sandwich constitué d'une pluralité de feuilles contrecollées par imprégnation de résine phénolique. Ces feuilles contrecollées contiennent une charge à base de carbone, tout comme la feuille décor est chargée de fibres à base de carbone. Selon ce document antérieur, la résine mélamine servant d'imprégnation de la feuille décor peut éventuellement contenir un sel ionique ainsi qu'une amine aliphatique tertiaire tout comme la résine de l'overlay.

Hormis le fait que ces documents antérieurs ont trait exclusivement à des panneaux HPL, l'on constate que pour répondre au problème du chargement en électricité statique de ces panneaux, ceux-ci sont rendus conducteurs au travers d'une charge intégrée à l'une et/ou l'autre feuille du sandwich dont ils sont constitués.

En fin de compte, dans le cadre d'une démarche inventive allant à l'allant à l'encontre de l'enseignement résultant de cet état de la technique, l'on a imaginé résoudre le problème en intégrant exclusivement dans la résine d'imprégnation du revêtement décoratif et/ou de l'overlay une charge ayant pour but de diminuer sa résistivité, pour assurer un écoulement normal des charges électrostatiques accumulées dans un tel revêtement de sol.

Tout particulièrement, par adjonction de ladite charge, il est obtenu une résistance du revêtement de sol, mesurée en surface entre deux électrodes espacées sensiblement de trente centimètres, soit dans les conditions de la norme DIN IEC 1340-4-1, qui est inférieure à 10¹³ Ohm. En fait, elle est préférentiellement comprise entre 10¹³Ohm et 10⁹Ohm.

Au final, la mise en oeuvre de l'invention permet d'obtenir des revêtements de sol exposant un usager à une tension corporelle, mesurée notamment dans les conditions préalablement décrites, soit conformément à la norme DIN IEC 1340-4-1, qui est inférieure à 2kV.

De manière avantageuse, la charge employée est constituée d'un ou d'un mélange d'électrolytes, notamment en phase aqueuse. Tout particulièrement, quelques exemples d'électrolytes susceptibles d'être employées pour augmenter cette conductivité sont :
- parmi les cations : Li⁺, K⁺, Na⁺, NH4⁺, Ag⁺, Ba²⁺, Sr²⁺, Mg²⁺, La³⁺ ;
- parmi les anions : 0H⁻, Cl⁻, Br⁻, I⁻, N0₃⁻, CH₃COO⁻ ,ClO_{4⁻}, SO₄²⁻, HCOO⁻ ;

Selon l'invention, la résine d'imprégnation de la balance contient, elle-aussi, une charge ayant pour but de diminuer sa résistivité. En fin de compte, il est là encore recherché une résistance du revêtement de sol au niveau de sa face inférieure, mesurée dans les mêmes conditions que précédemment, qui soit inférieure à 10¹³ Ohm, préférentiellement comprise entre 10¹³Ohm et 10⁹Ohm.

Il convient de remarquer qu'en agissant sur cette balance de manière similaire à la feuille décor et à l'overlay, il en résulte une synergie entre la face supérieure et inférieure du panneau pour l'obtention de la qualité antistatique.

Selon l'invention, la résine d'imprégnation contient une proportion de 1 à 20 % d'une solution d'un ou d'un mélange d'électrolytes, à une concentration de l'ordre de 10 à 40 %.

En aucun cas, il avait été imaginé préalablement de pouvoir obtenir ce caractère antistatique d'un panneau de sol stratifié basse pression en intégrant, exclusivement, un électrolyte ou un mélange d'électrolyte à la résine servant à imprégner le revêtement décoratif et/ou intervenant dans l'overlay d'un tel panneau de sol.

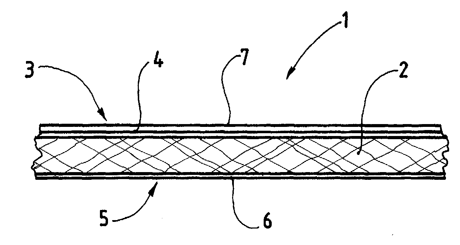

La présente invention sera mieux comprise à la lecture de la description qui va suivre et au vue du dessin ci-joint dans lequel la figure unique est une représentation schématisée d'une lame d'un revêtement de sol stratifié conforme à l'invention.

Tel que représenté dans cette figure du dessin ci-joint, la présente invention a trait à un revêtement de sol stratifié souvent constitué d'une pluralité de lames 1 assemblées par collage ou moyens d'emboîtement mécaniques.

De telles lames 1 comportent une âme 2 à base de bois, par exemple issue d'un panneau dérivé bois de type HDF ou MDF, recevant, sur sa face supérieure 3 un revêtement décoratif 4 constitué, le plus fréquemment, d'une feuille, notamment de papier kraft, imprimée d'un décor quelconque. Pour son application cette feuille est imprégnée d'une résine de type mélamine-formol, urée-formol, mélamine-urée-formol ou encore l'une et/ou l'autre de ces résines modifiées par des acrylates, des phénols, des époxy ou des polyesters. Très souvent, sur ce revêtement décoratif 4 est appliqué un overlay 7, sous forme d'une feuille cellulosique recevant, là encore, une résine d'imprégnation, préférentiellement identique à celle intervenant dans l'application du revêtement décoratif 4. Habituellement, l'overlay 7 est chargé d'oxyde d'alumine.

Du côté opposé au revêtement décoratif 4 de la lame 1, soit au niveau de sa face inférieure 5, est appliquée une balance 6 qui consiste, le plus fréquemment, en une simple feuille, notamment de papier kraft, elle-même imprégnée de l'une ou l'autre des résines précédentes.

Tout particulièrement et selon l'invention, dans la résine d'imprégnation intervenant au niveau du revêtement décoratif 4 et/ou de l'overlay 7, est introduite une charge ayant pour but de diminuer sa résistivité. Ainsi, cette charge est déterminée pour que l'électricité statique que peut accumuler le revêtement de sol en surface soit telle qu'un usager évoluant sur ce revêtement soit exposé à une tension corporelle inférieure à une valeur seuil, préférentiellement inférieure à 2kV lorsque mesurée dans les conditions exposées plus haut. En fin de compte, par adjonction de cette charge dans la résine l'on vient diminuer la résistance en surface du revêtement de sol. En particulier, lorsque mesurée entre deux électrodes espacées sensiblement de trente centimètres (conditions correspondant à la norme DIN IEC 1340-4-1), cette résistance est déterminée inférieure à 10¹³ ohm, préférentiellement comprise entre 10¹³ohm et 10⁹ohm.

Selon l'invention, la charge consiste en un électrolyte ou un mélange d'électrolytes, du type cation ou anion.

A titre d'exemple, en tant que cations il peut être retenu les électrolytes suivants :
- Li⁺, K⁺, Na⁺, NH4⁺, Ag⁺, Ba²⁺, Sr²⁺, Mg²⁺, La³⁺ ;

Par ailleurs, en tant qu'anions les exemples d'électrolytes suivants peuvent convenir :
- 0H⁻, Cl⁻, Br⁻, I⁻, N0₃⁻, CH₃COO⁻, ClO₄⁻, SO₄²⁻, HCOO⁻ ;

Tout particulièrement, ce ou ces électrolytes, pris individuellement ou en mélange, sont introduits sous forme d'une solution aqueuse dans la résine d'imprégnation.

Par ailleurs et selon un mode de réalisation préférentiel, par une adjonction adéquate d'un électrolyte ou d'un mélange d'électrolytes sous forme d'une solution aqueuse l'on diminue également la résistivité de la résine d'imprégnation de la balance 6 dans les mêmes proportions précitées, c'est à dire de sorte que, mesurée dans les conditions de la norme DIN IEC 1340-4-1, la résistance au niveau de la face inférieure du revêtement de sol soit inférieure à 10¹³ohm, préférentiellement comprise entre 10¹³ ohm et 10⁹ohm.

A noter, à ce propos, que pour atteindre ce résultat, il est ajouté aux résines de l'ordre de 1 à 20 % d'une solution électrolytique ayant une concentration comprise entre 10 et 40 % d'un électrolyte ou d'un mélange d'électrolytes.

Il est à noter que ces proportions dépendent de l'électrolyte retenu en fonction de la résine à charger. En particulier, il sera retenu l'électrolyte ou une combinaison d'électrolyte n'ayant pas d'influence sur le durcissement de cette résine, ni sur sa qualité physico-chimique. De même, cet électrolyte sera choisi de manière à ne pas modifier la coloration et/ou l'aspect optique de la surface du produit fini.

Selon un mode de réalisation préférentiel, l'âme 2 à base de bois est issue d'un panneau dérivé bois, de type HDF ou MDF, et est constituée à partir de fibres et/ou de particules de bois agglomérées sous presse et par addition d'un liant, tel qu'une résine de type mélamine-urée-formol. En fait, l'on a pu constater que l'on obtenait de très bons résultats avec comme liant une résine urée-formol sans présence de mélamine.

Tel que cela ressort de la description qui précède, la présente invention permet de remédier, de manière avantageuse, au problème d'une charge au moins électrostatique des revêtements de sol stratifié.

## Revendications

1. Revêtement de sol stratifié composé de lames (1) comportant une âme (2) à base de bois, en particulier issue d'un panneau dérivé bois de type HDF ou MDF, recevant sur sa face supérieure (3), un revêtement décoratif (4) et un overlay (7) comportant une résine d'imprégnation, **caractérisé par le fait que** la résine d'imprégnation du revêtement décoratif (4) et/ou de l'overlay (7) comporte une charge sous forme d'un ou d'un mélange d'électrolytes de manière à diminuer sa résistivité.

2. Revêtement de sol, selon la revendication 1, comportant au niveau de sa face inférieure (5) une balance (6) comportant une résine d'imprégnation, **caractérisé par le fait que** dans la résine d'imprégnation de la balance (6) est introduit une charge sous forme d'un électrolyte ou d'un mélange d'électrolytes pour réduire sa résistivité.

3. Revêtement de sol, selon la revendication 1 ou 2, **caractérisé par le fait que** la charge, sous forme d'un électrolyte ou d'un mélange d'électrolytes, introduite dans la résine d'imprégnation, est déterminée pour que la résistance du revêtement de sol, que l'on vient mesurer au niveau de la face supérieure (3) ou, selon le cas, de la face inférieure (5) de ce dernier, dans les conditions de la norme DIN IEC 1340-4-1, soit inférieure à 10¹³ ohm, préférentiellement comprise entre 10¹³ohm et 10⁹ohm.

4. Revêtement de sol selon l'une quelconque des revendications précédentes, **caractérisé par le fait que** la charge introduite dans la résine d'imprégnation est constituée d'un ou d'un mélange d'électrolytes en phase aqueuse.

5. Revêtement de sol selon la revendication 4, **caractérisé par le fait que** la résine d'imprégnation contient une proportion de 1 à 20 % d'une solution aqueuse d'un ou d'un mélange d'électrolyte à une concentration de l'ordre de 10 à 40 %.

6. Revêtement de sol selon l'une quelconque des revendications précédentes, **caractérisé par le fait que** l'âme (2) à base de bois est issue d'un panneau dérivé bois de type HDF ou MDF, intégrant un liant sous forme d'une résine de type mélamine-urée formol.

7. Revêtement de sol selon l'une quelconque des revendications 1 à 5, **caractérisé par le fait que** l'âme (2) à base de bois est issue d'un panneau dérivé bois de type HDF ou MDF, intégrant un liant sous forme d'une résine de type urée formol.

8. Revêtement de sol selon l'une quelconque des revendications précédentes, **caractérisé par le fait que** la résine d'imprégnation du revêtement décoratif (4), de l'overlay (7) et/ou de la balance (6) est constituée de l'une et/ou l'autre des résines suivantes :
- mélamine-formol
- urée-formol
- mélamine-urée-formol
- ou l'une et/ou l'autre de ces résines modifiées par des acrylates, des phénols, des époxy ou des polyesters.
